# EUROPEAN PATENT SPECIFICATION

(11) **EP 2 012 404 B1**
(45) Date of publication and mention of the grant of the patent: **11.09.2013**
(21) Application number: 07013043.0
(22) Date of filing: 03.07.2007
(51) Int. Cl.: H02H 7/26, G06F 1/28

(54) **Selective independent overload and group overload protection circuit of power supply**
Selektiver, unabhängiger Überlastschutz und Gruppenüberlastschutz für ein Netzteil
Circuit de protection sélectif et indépendant d'une alimentation électrique contre la surcharge et la surcharge de groupe

(43) Date of publication of application: 07.01.2009
(73) Proprietor: Silver-Stone Technology Co., Ltd., 235 Taipei County (TW)
(72) Inventor: Huang, Hsin-Sheng, Qianzhen District Kaohsiung City 806 (TW)
(74) Representative: Volpert, Marcus

(56) References cited:
- EP-A- 1 487 077
- DE-U1-202005 013 867

## Description

### Field of the Invention

The present invention relates to a selective independent overload and group overload protection circuit of a power supply, comprising a power conversion circuit, for converting an external power supply into a plurality of DC voltage outputs, and the power conversion circuit including a system output power supply and a system protection circuit; a plurality of independent circuits each including a plurality of independent output power supplies and an independent overload protection circuit with a one-to-one correspondence with each independent output power supply, and the independent overload protection circuit having a critical value of power output; and a plurality of loads, coupled to an independent output power supply in the plurality of independent circuits.

### Description of the Related Art

Science and technologies advance rapidly, and electronic technology is well developed. computer systems become increasingly more powerful as the functions of central processing units (CPU) and graphic cards are enhanced. With a variety of other additional functions, the functions of component modules that constitute the basic architecture of a computer become more powerful accordingly and maximize the Utility of the whole system. For instance, the specifications of central processing units are improved from single-core to dual-core architecture, and the graphic cards are upgraded to the high-resolution 3D effect for high-level computer players, and some computer systems even employ more than two or three graphic cards.

At present, a high-end graphic card requires an electric power of 150 watts, and a set of computer system consumes an electric power of 300-450 watts for its graphic cards, and thus the past power supply of 300-350 watts no longer can meet the requirement now. Furthermore, the quantity of other hard disk drives, optical disk drives and USB connectors increases and each device requires a lower voltage (in volts) and a higher electric power (in watts), so that the system can maximize its Utility, and the design of power supply tends to be high power.

Since it is necessary to take the user's safety into consideration for the design of the power supply, the SSI and UL specifications sets a critical value for the maximum output power of a single load. For example, the SSI 1 specification sets the critical value to 240 VA, which means that a current has an upper limit of 20 amperes (A) when the output voltage is 12 volts (V). The upper limit of the current is set to 20 amperes (A) for protecting the safety of computer users. However, a professional user generally connects many peripherals to the computer system, and thus a higher electric power is required. To meet this requirement, power supply manufacturers generally design and develop a power supply system with high power. As a result, a higher development cost is incurred. Furthermore, the power supplies come with various different specifications, and thus both manufacturing and carrying costs are increased as well.

In view of the foregoing shortcomings of the prior art, some designers proposed a power supply that allows users to select or increase the output power, and such power supply combines a plurality of power supplies to increase the total output power. For example, the original output current of a load is 20 A, and a select circuit is provided for users to set the output load to 30 A or above. Although this method can increase the output power of the load, the protection circuit is triggered to disconnect the power when the output power of a load is higher than the maximum allowed output power such as an output over 30 A, and the current requirement of other loads is lower than 20 A, and the sum of two output power is smaller than 50 A, and thus this method is very inconvenient and not suitable for practical applications.

A selective independent overload and group overload protection circuit of a power supply according to the preamble of claim 1 is known from EP 1 487 077 A2 which relate to a self-leaming electronic fuse. The electronic fuse blows when a parameter to be monitored inadmissibly deviates from a reference. Said reference is determined by the electronic fuse in a self-learning process.

### Summary of the Invention

In view of the foregoing shortcomings of the prior art, the inventor of the present invention based on years of experience in the related industry to conduct extensive researches and experiments, and finally developed a selective independent overload or group overload protection circuit of a power supply in accordance with the present invention to provide a feasible solution and overcome the foregoing shortcomings of the prior art.

The problem to be solved by the present invention is to increase power output according io the requirement of a load, maintaining overload protection.

A further objective of the present invention is to provide a plurality of circuits having a larger power output, so that users can select whether or not to turn on a group overload protection circuit according to the electric power requirement of a load.

The further objective of the present invention is to provide a power protection circuit and allow developers and manufacturers to design a power supply that does not require redesigning or developing a certain independent load with a larger requirement.

Another objective of the present invention is to provide users a way of switching to a group circuit when the output power requirement of a certain independent load increases, but the total output power of all loads in the group circuit has not reached the critical value, so as to maintain a normal operation of the power supply without disconnecting the power.

These objects are achieved by the selective independent overload and group overload protection circuit of a power supply according to the preamble of claim 1 by features characterized in claim 1.

The selective independent overload and group overload protection circuit of a power supply of the kind mentioned above is characterizes by a switching circuit, coupled to the system output power supply, wherein the plurality of independent circuits are selectively switched and coupled to the system output power supply by the switching circuit; and a group circuit, selectively switched and coupled to the system output power supply by the switching circuit, and the group circuit including a group output power supply and a group overload protection circuit, and the group overload protection circuit has a critical value of power output not greater than the sum of the critical values of power output of the plurality of independent output power supplies, wherein the plurality of loads are coupled to the independent output power supply in the plurality of independent circuits with a one-to-one correspondence with the group output power supply of the group circuit; thereby, a user can turn on an independent circuit or a group circuit by the switching circuit for selecting an appropriate power output according to the requirement of a load.

### BRIEF DESCRIPTION OF THE DRAWINGS

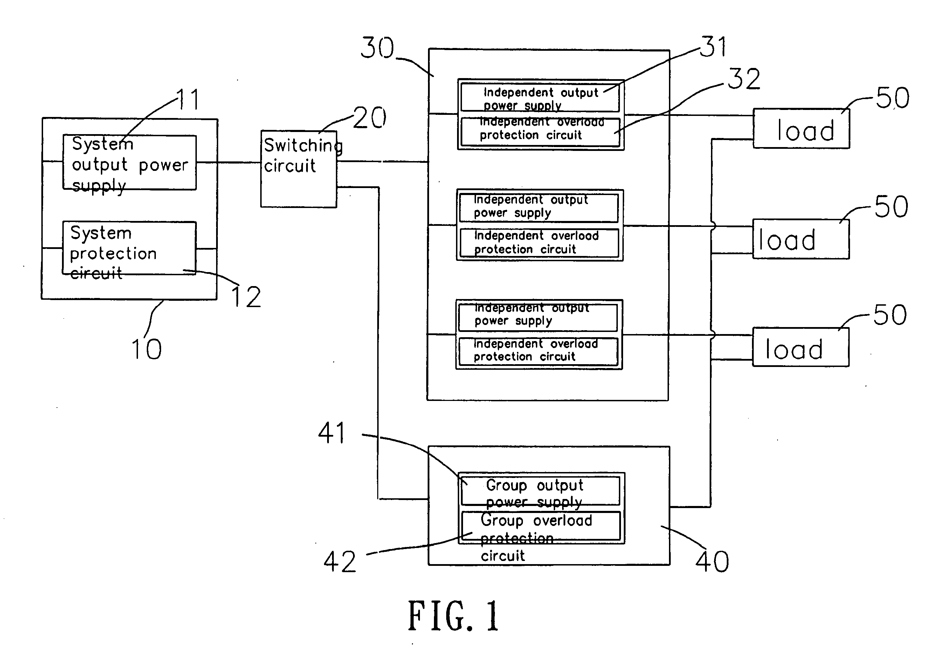

FIG. 1 is a schematic circuit diagram of the present invention.

### DETAILED DESCRIPTION OF THE PREFERRED EMBODIMENTS

The following detailed description with reference to the accompanying drawing of a preferred embodiment is given for example, but such preferred embodiment is not intended to limit the scope of the present invention. For simplicity, like numerals are used for like elements for the description of the specification of the present invention.

Referring to FIG. 1 for a schematic circuit diagram of a selective independent overload and group overload protection circuit of a power supply in accordance with the present invention, the power supply comprises a power conversion circuit 10, a switching circuit 20, a plurality of independent circuits 30 and a group circuit 40; wherein the power conversion circuit 10 converts an external power supply into several different voltage outputs (this preferred embodiment converts an external AC power of 110 volts or 220 volts into a DC voltage of +3.3 volts, +5 volts or +12 volts), and the power conversion circuit 10 includes a system output power supply 11 (providing a plurality of larger DC voltages of +12 volts and smaller voltages of +3,3 volts, +5 volts) and a system protection circuit 12. The system protection circuit sets the critical value of output power of the power supply according to the requirements of the SSI or UL specification. If the output of the power supply exceeds the critical value (overload), a power-off signal or a warning signal will be issued according to a predetermined processing procedure (wherein the protection circuit of this embodiment is a prior art, and the present invention is not limited to such arrangement only, but any other equivalent circuits are also covered in the scope of the invention, and the operation of related circuits will not be described here). A switching circuit 20 (which can be turned on manually by users or by an integrated circuit or another equivalent circuit) is connected to the system output power supply 11 and provided for users to select and drive a plurality of independent circuits 30 or a group circuit 40. A plurality of independent circuits 30 (which are three independent circuits adopted in this preferred embodiment) include a plurality of independent output power supplies 31 and an independent overload protection circuit 32 having a one-to-one correspondence with the independent output power supply 31. Further, the independent output power supply 31 is connected in a one-to-one correspondence with each load 50. A group circuit 40 includes a group output power supply 41 and a group overload protection circuit 42, and the group output power supply 41 is connected concurrently with each load 50, and the critical value of the group overload protection circuit 42 is not greater than the total output power of each independent overload protection circuit.

For the illustration of this invention, the voltage outputs of both independent circuit 30 and group circuit 40 adopted in this embodiment are equal to 12 volts.

In an application of the invention, the critical value of a single load output is specified according to the SSL or UL specification (particularly, the voltage of a single load output equals to 12 volts and the current is not greater than 20 amperes).

### First Situation:

If the total power used by a user is not greater than the output critical value of the system output power supply 11 and the user selects an output power of a single load 50 not greater than 20 amperes and the output power of any load 50 connected to the independent circuit 30 is greater than 20 amperes, then the independent overload protection circuit 32 will be turned on, and the power disconnection or a warning signal will be issued.

### Second Situation:

If the total power used by a user is not greater than the critical value of the system protection circuit 12 and the user selects a group circuit 40, and the output power of any load 50 connected to the group circuit 40 is greater than 20 amperes, but the total output power of the group circuit 40 is not greater than 20 amperes *3 = 60 amperes, then the group overload protection circuit 42 will not be turned on but will maintain a normal operation of the power supply. On the other hand, if the power output of the group circuit 40 is greater than 20 amperes *3 = 60 amperes, then the group overload protection circuit 42 will be turned on, and a power-off signal or a warning signal will be issued.

### Third Situation:

If a user selects an independent circuit 30 or a group circuit 40, and the critical value is not exceeded, and the power output of the total load (including the ioads connected to the voltages of 12 volts, 3,3 volts and 5 volts) connected to the power supply is greater than that of the system protection circuit 12, then the system protection circuit 12 will be turned on, and a power-off signal or a warning signal will be issued.

In summation of the description above, the selective independent overload and group overload protection circuit of a power supply in accordance with the present invention comes with a simple structure, provides a convenient way of use, enhances the prior art and also complies with the patent application requirements, and thus the invention is duly filed for the patent application.

## Claims

1. A selective independent overload and group overload protection circuit of a power supply, comprising:
a power conversion circuit (10), for converting an external power supply into a plurality of DC voltage outputs, and the power conversion circuit including a system output power supply (11) and a system protection circuit (12);
a plurality of independent circuits (30) each including a plurality of independent output power supplies (31) and an independent overload protection circuit (32) with a one-to-one correspondence with each independent output power supply (31), and the independent overload protection circuit (32) having a critical value of power output; and
a plurality of loads (50), coupled to an independent output power supply (31) in the plurality of independent circuits (30);
**characterized by**
a switching circuit (20), coupled to the system output power supply (11), wherein the plurality of independent circuits (30) are selectively switched and coupled to the system output power supply (11) by the switching circuit (20); and
a group circuit (40), selectively switched and coupled to the system output power supply by the switching circuit, and the group circuit (40) including a group output power supply (41) and a group overload protection circuit (42), and the group overload protection circuit (42) has a critical value of power output not greater than the sum of the critical values of power output of the plurality of independent output power supplies (31), wherein the plurality of loads (50) are coupled to the independent output power supply (31) in the plurality of independent circuits (30) with a one-to-one correspondence with the group output power supply (41) of the group circuit (40);
thereby, a user can turn on an independent circuit (30) or a group circuit (40) by the switching circuit (20) for selecting an appropriate power output according to the requirement of a load (50).

2. The selective independent overload and group overload protection circuit of a power supply as recited in claim 1, wherein the system output power supply (11) has an electric DC power selected from the collection of +3.3 volts, +5 volts and +12 volts.

3. The selective independent overload and group overload protection circuit of a power supply as recited in claim 1, wherein the independent output power supply (31) of the independent circuit is equal to +12 volts.

4. The selective independent overload and group overload protection circuit of a power supply as recited in claim 1, wherein the system protection circuit (12) issues a power-off signal or a warning signal according to a predetermined processing procedure, if the output power of a power supply (11) exceeds the critical value of output power.

5. The selective independent overload and group overload protection circuit of a power supply as recited in claim 1, wherein the switching circuit (20) is turned on by a manual circuit.

6. The selective independent overload and group overload protection circuit of a power supply as recited in claim 1, wherein the switching circuit (20) is turned on by an integrated circuit.

## Patentansprüche

1. Selektiver, unabhängiger Überlastschutz und Gruppen-Überlastschutz-Schaltung für eine Stromquelle; umfassend eine Stromrichterschaltung (10) zur Umwandlung einer externen Stromzufuhr in mehrere Gleichstrom-Spannungsausgänge, wobei die Stromrichterschaltung eine Systemausgangs-Stromzufuhr (11) und eine Systemschutzschaltung (12) aufweist, ferner umfassend mehrere unabhängige Schaltungen (30), von denen jede mehrere unabhängige Ausgangsstromzufuhren (31) und eine unabhängige Überlastungsschutzschaltung (32) mit einer 1 : 1 - Entsprechung mit jeder unabhängigen Ausgangsstromzufuhr (31) aufweist, wobei ferner die unabhängige Überlastungsschutzschaltung (32) einen kritischen Wert für den Stromausgang besitzt; und schließlich umfassend mehrere Verbraucher (50), die an eine unabhängige Ausgangsstromzufuhr (31) in den mehreren unabhängigen Schaltkreisen (30) angeschlossen sind, **gekennzeichnet durch** eine Umschaltschaltung (20), die mit der Systemausgangs-Stromzufuhr (11) gekoppelt ist, wobei die mehreren unabhängigen Schaltkreise (30) selektiv geschaltet werden und mit der Systemausgangs-Stromzufuhr (11) mit Hilfe der Umschaltschaltung (20) verbunden werden; und des weiteren **gekennzeichnet durch** eine Schaltungsgruppe (40), die selektiv umgeschaltet und mit der Systemausgangs-Stromzufuhr **durch** die Umschaltschaltung gekoppelt wird, wobei die Gruppenschaltung (40) mit einem Gruppenausgangs-Stromzufuhr (41) und einer Gruppenüberlast-Schutzschaltung (42) versehen ist und diese Gruppenüberlast-Schutzschaltung (42) einen kritischen Stromausgangswert aufweist, der nicht größer ist als die Summe der kritischen Stromausgangswerte der mehreren unabhängigen Ausgangsstromzufuhren (31), und wobei die mehreren Verbraucher (50) an die unabhängige Ausgangsstromzufuhr (31) in den mehreren unabhängigen Schaltungen (30) in einer 1 : 1 - Entsprechung mit der Gruppenausgangs-Stromzufuhr (41) der Gruppenschaltung (40) verbunden sind, wodurch ein Benutzer eine unabhängige Schaltung (30) oder eine Gruppe Schaltungen (40) **durch** die Umschaltschaltungen (20) einschalten kann, um einen geeigneten Stromausgang gemäß den Anforderungen eines Verbrauchers (50) auszuwählen.

2. Selektiver, unabhängiger Überlastschutz und Gruppen-Überlastschutz-Schaltung für eine Stromquelle nach Anspruch 1, **dadurch gekennzeichnet, daß** die Systemausgangs-Stromzufuhr (11) einen elektrischen Gleichstrom aufweist, der aus der Reihe + 3,3 Volt, + 5 Volt und + 12 Volt ausgewählt ist.

3. Selektiver, unabhängiger Überlastschutz und Gruppen-Überlastschutz-Schaltung für eine Stromquelle nach Anspruch 1, **dadurch gekennzeichnet, daß** die unabhängige Ausgangsstromquelle (31) der unabhängigen Schaltung eine Spannung von + 12 Volt hat.

4. Selektiver, unabhängiger Überlastschutz und Gruppen-Überlastschutz-Schaltung für eine Stromquelle nach Anspruch 1, **dadurch gekennzeichnet, daß** die Systemschutzschaltung (12) ein Stromausgangssignal oder ein Warnsignal gemäß einem vorbestimmten Betriebsvorgang aussendet, wenn der Stromausgang einer Stromquelle (11) den kritischen Wert für den Stromausgang überschreitet.

5. Selektiver, unabhängiger Überlastschutz und Gruppen-Überlastschutz-Schaltung für eine Stromquelle nach Anspruch 1, **dadurch gekennzeichnet, daß** die Umschaltschaltung (20) durch eine manuelle Schaltung eingeschaltet wird.

6. Selektiver, unabhängiger Überlastschutz und Gruppen-Überlastschutz-Schaltung für eine Stromquelle nach Anspruch 1, **dadurch gekennzeichnet, daß** die Umschaltschaltung (20) durch eine integrierte Schaltung eingeschaltet wird.

## Revendications

1. Circuit de protection sélectif à l'encontre d'une surcharge indépendante et d'une surcharge de groupe dans une alimentation de puissance, comprenant :
un circuit de conversion de puissance (10), pour convertir une alimentation de puissance externe en une pluralité de sorties à voltage continu, et le circuit de conversion de puissance incluant une alimentation de puissance de sortie système (11) et un circuit de protection système (12) ;
une pluralité de circuits indépendants (30) incluant chacun une pluralité d'alimentations de puissance de sortie indépendantes (31) et un circuit de protection de surcharge indépendant (32) avec une correspondance un-pour-un avec chaque alimentation de puissance de sortie indépendante (31), et le circuit de protection de surcharge indépendant (32) ayant une valeur critique de sortie de puissance ; et
une pluralité de charges (50), couplées à une alimentation de puissance de sortie indépendante (31) dans la pluralité de circuits indépendants (30) ;
**caractérisé par**
un circuit de commutation (20), couplé à l'alimentation de puissance de sortie système (11), dans lequel la pluralité de circuits indépendants (30) sont sélectivement commutés et couplés à l'alimentation de puissance de sortie système (11) par le circuit de commutation (20) ; et
un circuit de groupe (40), sélectivement commuté et couplé à l'alimentation de puissance de sortie système par le circuit de commutation, et le circuit de groupe (40) incluant une alimentation de puissance de sortie de groupe (41) et un circuit de protection de surcharge de groupe (42), et le circuit de protection de surcharge de groupe (42) présente une valeur critique de sortie de puissance qui n'est pas supérieure à la somme des valeurs critiques des sorties de puissance de la pluralité d'alimentations de puissance de sortie indépendantes (31), dans lequel la pluralité de charges (50) sont couplées à l'alimentation de puissance de sortie indépendante (31) dans la pluralité de circuits indépendants (30) avec une correspondance un-pour-un avec l'alimentation de puissance de sortie de groupe (41) du circuit de groupe (40) ;
grâce à quoi un utilisateur peut mettre en marche un circuit indépendant (30) ou un circuit de groupe (40) par le circuit de commutation (20) pour sélectionner une sortie de puissance appropriée selon les besoins d'une charge (50).

2. Circuit de protection sélectif à l'encontre d'une surcharge indépendante et d'une surcharge de groupe dans une alimentation de puissance selon la revendication 1, dans lequel l'alimentation de puissance de sortie système (11) présente une puissance électrique en courant continu parmi le groupe de + 3,3 V, + 5V et + 12V.

3. Circuit de protection sélectif à l'encontre d'une surcharge indépendante et d'une surcharge de groupe dans une alimentation de puissance selon la revendication 1, dans lequel l'alimentation de puissance de sortie indépendante (31) du circuit indépendant est égale à + 12 V.

4. Circuit de protection sélectif à l'encontre d'une surcharge indépendante et d'une surcharge de groupe dans une alimentation de puissance selon la revendication 1, dans lequel le circuit de protection système (12) délivre un signal de coupure de puissance ou un signal d'avertissement selon une procédure de traitement prédéterminée, si la puissance de sortie d'une alimentation de puissance (11) excède la valeur critique de puissance de sortie.

5. Circuit de protection sélectif à l'encontre d'une surcharge indépendante et d'une surcharge de groupe dans une alimentation de puissance selon la revendication 1, dans lequel le circuit de commutation (20) est mis en service par un circuit manuel.

6. Circuit de protection sélectif à l'encontre d'une surcharge indépendante et d'une surcharge de groupe dans une alimentation de puissance selon la revendication 1, dans lequel le circuit de commutation (20) est mis en service par un circuit intégré.
